# EUROPEAN PATENT APPLICATION

(11) **EP 4 779 180 A1**
(43) Date of publication of application: **22.07.2026**
(21) Application number: 25152138.1
(22) Date of filing: 15.01.2025
(51) Int. Cl.: F16J 15/06, F16J 15/10, F16J 15/12, F16L 23/22

(54) **A SEALING GASKET**

(71) Applicant: Static Seals AS, 3610 Kongsberg Buskerud (NO)
(72) Inventor: Nygård, Anders, 3610 Kongsberg (NO)
(74) Representative: Yalçiner Patent and Consulting Ltd.

(57) **Abstract**

The invention relates to a gasket (G) having The outer ring (1) and the inner ring (2) is made of non-metallic and vulcanized material and the inner ring (2) is made of non-metallic material which is softer than the material of the outer ring (1); ; a lip section (L) provided on at least one of upper or lower surface of the inner ring (2) having plurality of lips extends radially; at least one radially extending connection groove (3) and at least one radially extending connection protrusion (4) placed into the connection groove (4) and fixing each other by molecular bonding to connect the outer ring (1) and the inner ring (2) wherein one of the connection groove (3) and the connection protrusion (4) provided at inner diameter of the outer ring (2) and other one is provided at outer diameter of the inner ring (2).

## Description

### Technical Field

The invention relates to a sealing technology that ensures optimal compression and positioning of sealing members.

### Prior Art

In the field of sealing gaskets, especially gasket used in pipeline systems, ensuring a reliable seal is crucial for maintaining the integrity and safety of the system. Sealing members are used to prevent leaks and contamination, which can lead to significant operational issues and safety hazards.

Traditional sealing methods often face challenges such as uneven surfaces, varying pressure conditions, and the need for precise compression to avoid damage to the sealing member. These challenges necessitate the development of advanced sealing solutions that can adapt to different conditions while providing a secure and reliable seal. The reinforcement ring and sealing member described in the current invention address these issues by offering a robust and adaptable solution for maintaining pipeline integrity.

A further problem about sealing gasket is difficulties during the installation of the gasket. More clearly, the gasket alignment is big problem because lack of space during connecting the flange. To provide alignment, lots of screwing process is required and this process is very time consuming.

US4040636A discloses a sealing element defines two outer rings axially distanced and an inner ring positioned between the outer rings. The inner ring is relatively softer than the outer rings and they can be made of rubber-like materials. The inner ring comprises an axially extended part and the outer rings comprise recesses which the extended parts are placed into.

US3848880A discloses a sealing ring formed by two rings. These rings are positioned axially with respect to each other. One of the rings, the upper ring, is made of a relatively softer material than the other ring. The connection between the rings is completely mechanical. Ring is positioned inside the channel of ring. There are pockets formed inside the channel, and ring comprises teeth to fit into the channel.

CN209340496U defines a self-sealing (self-energized) gasket body. This gasket body comprises tooth-shaped grooves on both sides of the gasket body and the tooth-shaped grooves provide better sealing for the gasket on uneven surface.

The sealing gasket of CN108757939A comprises coaxially positioned multiple annular rings. Each ring, except the inner ring, has a notch. This notch allows the ring to be torn from the rest of the gasket if it is not required

As a result, all of the problem mentioned above has made it necessary to provide a novelty in the related field.

### Brief Description and Objects of the Invention

In accordance with embodiments, a gasket is provided having an outer ring and an inner ring positioned radially inwards to the outer ring for sealing between flanges. The outer ring and the inner ring are made of non-metallic material, with the material of the inner ring being softer than that of the outer ring. A lip section is provided on at least one of the upper or lower surfaces of the inner ring, having a plurality of lips extending radially. At least one radially extending connection groove and at least one radially extending connection protrusion are placed into the connection groove and fixed to each other by molecular bonding to connect the outer ring and the inner ring. One of the connection groove and the connection protrusion is provided at the inner diameter of the outer ring and the other at the outer diameter of the inner ring.

This difference in material properties and connection geometry and bonding allows the inner ring to provide better sealing by conforming more easily to the surfaces it contacts, while the outer ring provides structural support and durability. The gasket of the invention ensures the right compression of the sealing and provides clamp force on the bolts without damaging the sealing member. The sealing member provides sealing because the pressure of the medium helps the sealing to seal, making it self-energized. The reinforcement ring stops the compression of the sealing member, ensuring it always has the correct compression.

In accordance with other embodiments, the connection groove has a curved surface, and the connection protrusion has a curved surface that corresponds to the curved surface of the connection groove. Thus, better bonding achieved between the connection groove and protrusion.

In other embodiments, the lip section has inner lips positioned in a sequential manner from the inner to the outer diameter of the inner ring. Thus, better sealing performance is achieved at uneven surfaces.

In further embodiments, the inner lips have a pointy end, an angled ramp surface, and an axially extending back surface, with the angled ramp surface extending from the pointy end to the back surface of the next inner lip.

In accordance with other embodiments, the lip section has at least one outer lip positioned between the inner lips and the outer diameter of the inner ring, which is radially distant from the inner lips and extends deeper than the inner lips into the inner ring. Thus, a vacuum force that prevent entry of material from outside.

In yet other embodiments, a centering part is provided, having a centering body circumferentially at the outer diameter of the outer ring and a tearable part connecting the centering body to the outer ring. At least one groove is provided on the centering body to enable centering of the gasket during the screwing of the flanges to each other. Thus, easier and faster alignment during installation is provided.

### Description of the Figures of the Invention

The figures and related descriptions necessary for the subject matter of the invention to be understood better are given below.
**Figure 1****.** An isometric view of the gasket with a centering part.
**Figure 1a****.** A top view of Fig. 1
**Figure 1b****.** A cross-section view of Fig. 1a, along axis-A.
**Figure 1c****.** A detailed view of section B of Fig. 1b.
**Figure 1d****.** A detailed view of lip section.
**Figure 2****.** An isometric view of the gasket positioned on the flange.

### Reference Numbers

The parts and components are given in the figures are referenced for the subject matter of the invention to be understood better.
**1.** Outer ring
**2.** Inner ring
   **21.** Inner lip section
      **211.** Inner lips
         **2111.** Pointy end
         **2112.** Ramp surface
         **2113.** Back surface
   **22.** Outer lip
      **221.** First section
      **222.** Second section
      **223.** Third section
      **224.** Outer pointy end
**3.** Connection groove
**4.** Connection protrusion
**5.** Centering part
   **51.** Centering body
   **52.** Tearable part
   **53.** Groove
**G.** Gasket
**L.** Lip section
**F.** Flange
**S.** Screw hole

### Detailed Description of the Invention

The invention relates to a sealing technology that ensures optimal compression and positioning of sealing members.

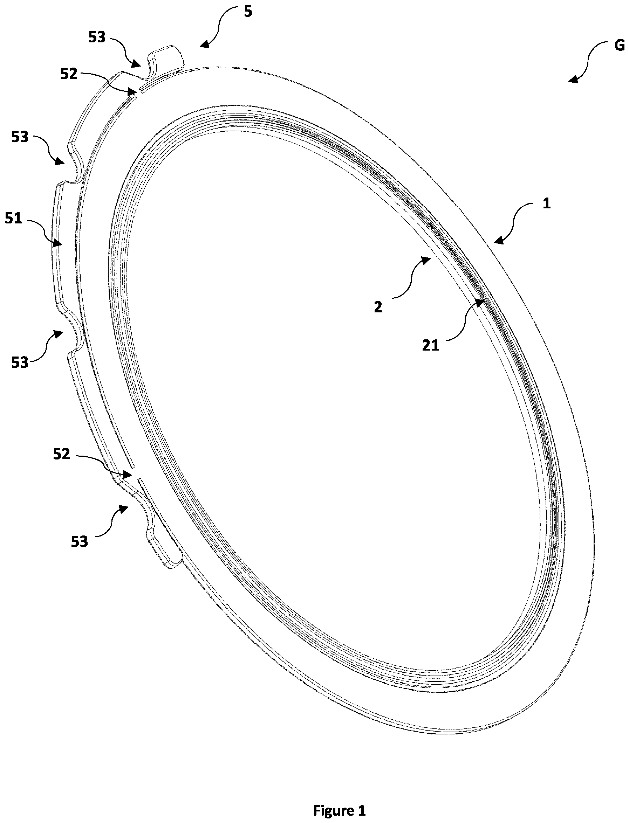

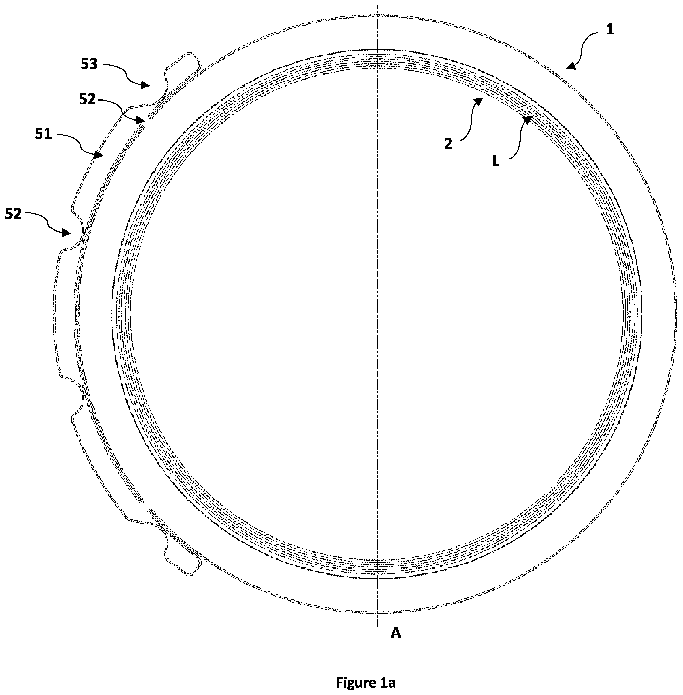

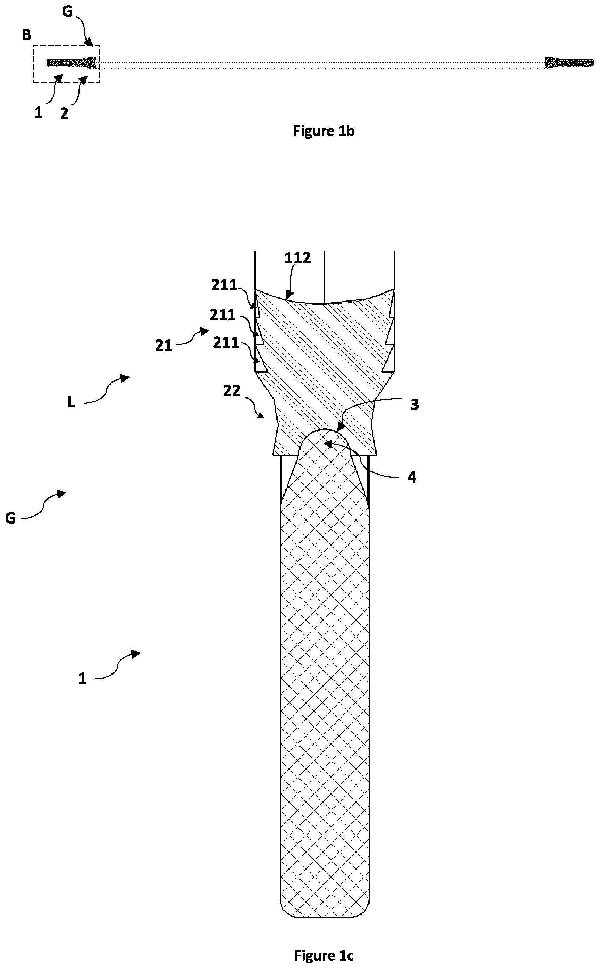

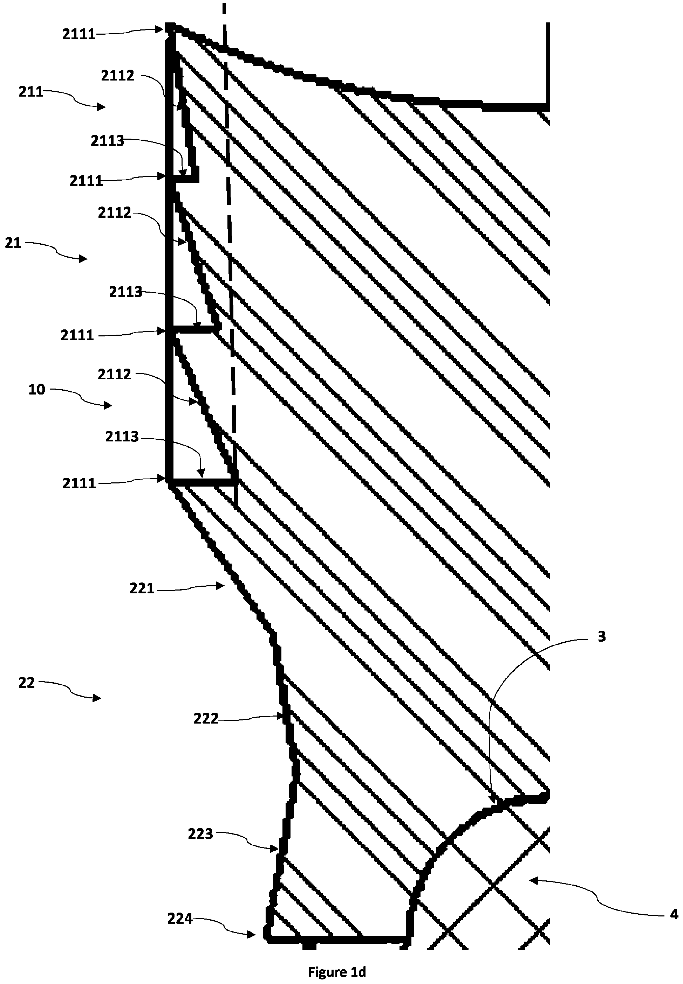

Referring to Fig. 1 and Fig. 1a; The gasket (G) comprises an outer ring (1) and an inner ring (2) made of non-metallic material, where the material of the inner ring (2) is softer than the material of the outer ring (1). The outer ring (1) and the inner ring (2) are positioned coaxially and fixed each other. The both rings are continuous ring shaped and the inner ring (2) is positioned radially inwards to the outer ring (1). Mainly, the inner ring (2) functions as sealing member and the inner rings (1) enables keeping up desired clamping force.

In certain embodiments, the outer ring (1) and the inner ring (2) are selected from polymer to ensure proper compression and effective clamping without damaging the sealing member. Preferably, the outer ring (1) is made of semi-rigid, between Rockwell R scale as 90 and 80, and the inner ring is soft, deformable or elastic.

The inner ring (2) may be made of rubber or thermoplastic rubber, providing flexibility and sealing properties. The outer ring (1) may be made of polypropylene or carbon fiber reinforced polypropylene, especially glass carbon fiber, for strength and durability. These material compositions ensure that the gasket will secure the right compression of the sealing and give clamp force on the bolts without damaging the sealing member. The sealing member provides sealing because the pressure for the medium helps the sealing to seal and clamping force. Self-energized, the reinforcement ring will also stop the compressing of the sealing member, so it always will have correct compression.

However, for providing the correct strength and durability, the selection of material will not be enough. The correct positioning and connection between the rings (1, 2) must be ensured, too.

Referring to Fig. 1b-1c; A radially extending connection groove (3) and a radially extending connection protrusion (4) are provided to enable connection between the rings (1, 2). This connection groove (3) and connection protrusion (4) provided on radial surfaces of the rings (1,2) more clearly on the surfaces looks each other when the positioned coaxially.

In the invention, the connection protrusion (4) is formed in such a way that it corresponds to the connection groove (3) for ensuring a secure fit. The connection protrusion (4) can be provided at the outer ring (1) and connection groove (3) can be provided at the inner ring (2) or vice-versa.

The radially extending connection protrusion (4) are placed into the connection groove (3) and fix each other specifically by molecular bonding. For example, by heating. By molecular bonding. fitted connection grove and protrusion ensures proper compression and effective clamping without damaging the gasket itself.

The outer ring (1) is made of vulcanized material. The known vulcanization techniques are used to vulcanize the outer ring (1). The vulcanization brings polymers chain out of monomers for the material of the outer ring (1).

In a preferred embodiment, Un-vulcanized outer ring (1) material are inserted into a rubber injection molding machine, where the rubber formula contains a vulcanization medium such as sulfur, peroxide, or a similar agent. This formula is chemically structured with different monomers. The outer ring (2) material is then heated to a temperature of around 150-200°C and injected into a mold. It remains in the mold for a specific time and at a controlled temperature to complete the vulcanization process, which results in the formation of polymer chains from the monomers. The mold mentioned here configured to form connection protrusion (4) or the connection groove (3) for the inner ring (1).

Vulcanized outer ring (1) is then loaded into another plastic injection molding machine, either manually or by a robot. Material of the inner ring (2) is introduced into the machine in granulate form. It is heated until it becomes liquid and then injected into the mold, where Vulcanized outer ring (1) is already positioned. Once inside the mold, the material of the inner ring (2) is cooled down to achieve the desired shape and mechanical properties. The mold mentioned here is configured to form connection protrusion (4), if the outer ring (1) has connection groove (3), or connection groove (3), if the outer ring (1) has connection protrusion (4), for the inner ring (2).In a preferred embodiment, each of rings (1, 2) comprise one connection groove (3) or connection protrusion (4). However, designing rings having multiple connection groove (3) or connection protrusion (4) is also possible.

In a preferred embodiment, the connection groove (3) and the connection protrusion (4) may have curved surfaces that correspond to each other to provide better fit between the parts. The connection groove (3) and the connection protrusion (4) may extend circumferentially at the inner diameter of the outer ring (1) or at the outer diameter of the inner ring (2). Alternatively, shapes like polygonal shapes like rectangular however bonding can be provided with curved the connection groove (3) and the connection protrusion (4).

In preferred embodiment, the inner diameter surface of the inner ring (2), which extends axially, is in curved form to receiving liquid flow pressure to transmit all the gasket (G) for enhancing self-energizing sealing wherein initial clamp force starts the sealing.

The gasket (G) comprising a lip section (L) is provided on the upper surface of the inner ring (2). Alternatively, the lip section can be provided on lower surface or both surfaces of the inner ring (2).

The lip section (L) comprises a plurality of lips that extend radially in respect to the central axis of the gasket (G). This structural feature enhances the sealing capability of the inner ring (2). The lip section (L) comprises inner lip section (21) and outer lip (22). The outer lip (22) being positioned between the inner lips (211) and outer diameter of the inner ring (2) and is radially distant from the inner lips (2) and the inner lip section (21) comprises a plurality of inner lips (211) positioned in a sequential manner from the inner to the outer diameter of the inner ring (2).

The inner lip section (21) will individually be able to seal if there is an uneven surface it seals against.

Referring to the Fig. 1d; Preferably, the inner lips (211) may have a pointy end (2111), an angled ramp surface (2112), and an axially extending back surface (2113), where the angled ramp surface (2112) extends from the pointy end (2111) to the back surface (2113) of the next inner lip (211). The structure forms a lip has cross-section looks like sawtooth wave. More clearly, the shape has ramps (2112) upwardly extending and then sharply dropping backs surface (2113). This structural feature enhances sealing effect of inner lips (211) at an uneven surface.

In a preferred embodiment, the back surface (2113) length (in axial direction) gradually increases from inner diameter of the inner ring (2) to outer diameter of the inner ring (2).

Additionally, the lip section (L) may have at least one outer lip (22) positioned between the inner lips (211) and the outer diameter of the inner ring (2), which is radially distant from the inner lips (211) and extends deeper than the inner lips (211) into the inner ring (2). This design ensures effective sealing against uneven surfaces and vacuum conditions. The distance between the inner lip section (21) and the outer lips (22) and being the outer lip (2) deeper than inner lips (211), more clearly extends deeper into the inner lip (2) body create gap enough to vacuum to prevent entry of any unwanted materials into the gasket (G).

Preferably, outer lip (22) comprises a first section (221) in a form ramp that extends from last pointy end (2111) of the inner lip section (21) to a second section (222). The second section (222) can be flat or angled surface that connected a third section (223) which is in form of ramp. End of the third section is an outer pointy end (224) which also defines outer diameter of the inner ring (2).

In a preferred embodiment, the gasket for inner lips (211) and one outer lip (22) to provide enhanced sealing performance and the vacuum effect for preventing entry of any unwanted materials.

In certain embodiments, a centering part (5) having a centering body (51) is provided circumferentially at the outer diameter of the outer ring (1), and a tearable part (52) connects the centering body (51) to the outer ring (1). At least one groove (53) is provided on the centering body (51) to enable centering of the gasket (G) during the screwing of the flanges (F) to each other. The centering body (51) may extend around a part of the diameter of the outer ring (2).

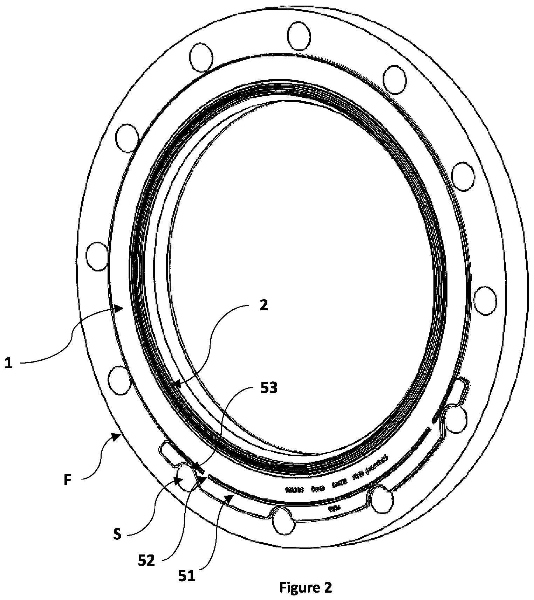

Referring to Fig. 2; In Fig. 2, the only one flange (F) is shown however the gasket (G) positioned between two flanges (F) in practical embodiments. The centering part (5) makes easier of installation of the gasket between the flanges (F), for example flanges (F) of pipeline. Before assembly, the user decides whether the centering piece is necessary. If not, the user tears the centering part (5) from rest of the gasket (G). the centering part is easily detached from the rest of the gasket (G) by cutting or tearing the tearable part (52) from the outer ring (1).

If the user decided to use centering part (5), the groove (53) is positioned in same position with screws holes (S), as can be seen in Fig. 2, and that screws connect the flanges (F), the gasket (G) will be automatically at the center of the flanges (F).

This centering mechanism ensures the gasket is properly aligned during installation. For PN10 pressure class, a small part of the ring can be broken off, and the bolts will then keep it in the center. For PN16, there are 2 or 4 half circles that will rest on 2 or 4 bolts to keep it in the center. The reinforcement ring can resist the clamp force in each bolt, ensuring the gasket remains centered in the pipeline.

## Claims

1. A gasket (G) having an outer ring (1) and an inner ring (2) positioned radially inwards to the outer ring (1) for sealing between flanges (F) **characterized by**;
The outer ring (1) and the inner ring (2) is made of non-metallic and vulcanized material and the inner ring (2) is made of non-metallic material which is softer than the material of the outer ring (1);
A lip section (L) provided on at least one of upper or lower surface of the inner ring (2) having plurality of lips extends radially;
At least one radially extending connection groove (3) and at least one radially extending connection protrusion (4) placed into the connection groove (4) and fixing each other by molecular bonding to connect the outer ring (1) and the inner ring (2) wherein one of the connection groove (3) and the connection protrusion (4) provided at inner diameter of the outer ring (2) and other one is provided at outer diameter of the inner ring (2).

2. Gasket (G) according to Claim 1 **characterized by** the connection groove (3) having a curved surface and the connection protrusion (4) having a curved surface corresponds to the curved surface of the connection groove (3).

3. Gasket (G) according to any of preceding claims **characterized by** the connection groove (3) extends circumferentially at inner diameter of the outer ring (1) or at outer diameter of the inner ring (2).

4. Gasket (G) according to any of preceding claims **characterized by** the connection protrusion (4) extends circumferentially at inner diameter of the outer ring (1) or at outer diameter of the inner ring (2).

5. Gasket (G) according to any of preceding claims **characterized by** the connection groove (3) is provided at outer diameter of the inner ring (2) and the connection protrusion (4) is provided at outer diameter of the inner ring (2).

6. Gasket (G) according to any of preceding claims **characterized by** material of the outer ring (1) and the inner ring (2) are selected from polymer.

7. Gasket (G) according to Claim 6 **characterized by** the inner ring (2) is made of rubber.

8. Gasket (G) according to any Claim 6 or 7 **characterized by** the outer ring (1) is made of polypropylene.

9. Gasket (G) according to Claim 1 **characterized by** the lip section (L) having inner lips (211) being positioned in a sequential manner from an inner to an outer diameter the inner ring (2).

10. Gasket (G) according to Claim 9 **characterized by** the inner lips (211) having a pointy end (2111) and angled ramp surface (2112) and an axially extending back surface (2113) wherein the angled ramp surface (2112) extends from the pointy end (2111) to the back surface (2113) of the next inner lip (211).

11. Gasket (G) according to any of Claim 9 or 10, **characterized by** the lip section (L) having at least one outer lip (22) being positioned between the inner lips section (21) and outer diameter of the inner ring (2) and is radially distant from the inner lip section (21) and extends deeper than the inner lips (211) into the inner ring (2).

12. Gasket (G) according to Claim 1 **characterized by** a centering part (5) having a centering body (51) provided circumferentially at outer diameter of the outer ring (1) and a tearable part (52) connect the centering body (51) to the outer ring (1) and at least one grove (52) provided on the centering body (52) to enable centering of the gasket (G) during screwing of the flanges (F) to each other.

13. Gasket (G) according to Claim 12 **characterized by** the centering body (51) extends around a part of the diameter of the outer ring (2).

14. Gasket (G) according to any of preceding claims **characterized by** the outer ring (1) is made of semi-rigid material that is between Rockwell R scale as 90 and 80.

15. The method for producing a gasket according to any of preceding claims, **characterized by**,
Vulcanizing the outer ring (2),
Placing the vulcanized outer ring (1) into a mold,
Introducing the material of the inner ring (2) into the mold in liquid form and waiting or actively cool down the liquid form material of the inner ring (2).
